# EUROPEAN PATENT SPECIFICATION

(11) **EP 3 069 825 B1**
(45) Date of publication and mention of the grant of the patent: **07.10.2020**
(21) Application number: 16158359.6
(22) Date of filing: 03.03.2016
(51) Int. Cl.: B25B 21/00, B25F 5/00

(54) **POWER TOOL**
ELEKTROWERKZEUG
OUTIL ÉLECTRIQUE

(30) Priority: 12.03.2015 JP 2015049650
(43) Date of publication of application: 21.09.2016
(73) Proprietor: Panasonic Intellectual Property Management Co., Ltd., Osaka-shi, Osaka 540-6207 (JP)
(72) Inventor: IKEDA, Masaki, Osaka, 540-6207 (JP); TSURUTA, Naoki, Osaka, 540-6207 (JP)
(74) Representative: Appelt, Christian W.

(56) References cited:
- EP-A1- 2 623 268
- EP-A2- 2 711 138

## Description

The present invention relates to a power tool.

Document JP 2014-213422 A discloses a handheld power tool. The handheld power tool includes a battery pack attached in a removable manner to a power tool body that includes, for example, a motor and a control circuit. The battery pack, which has a built-in rechargeable battery that includes battery cells, supplies drive power to the power tool body.

The motor of the above power tool has a high output. This increases the load applied to the motor and the motor easily heats. When the load applied to the motor increases, the power tool may fail to function. Thus, to protect the motor from an overload, the state of the motor may be monitored using, for example, a temperature sensor that detects the temperature of the motor, a rotation sensor that detects the rotation speed of the motor, or a current detector that detects current flowing through the motor. However, it is difficult to increase the number of sensors and provide room for sensors. Accordingly, it is desirable that a power tool that allows for determination of the load applied to the motor with a limited number of components be developed.

Document EP 2 623 268 A1 discloses an electric tool being powered by a secondary battery as a power source, and includes an output section configured to be transmitted thereto a rotation of a motor directly or through a decelerator, a voltage measurement section that measures a battery voltage, a storage means that stores, as a reference voltage, a voltage value of the battery voltage measured preliminarily when a motor-lock is occurring and a control means 30 that controls a driving of the motor. The control means is configured to decide that the motor is being locked and then stop or decelerate the motor upon detecting that the battery voltage measured through the voltage measurement section is maintained lower than or equal to the reference voltage stored in the storage means for a predetermined period of time during the driving of the motor.

Document EP 2 711 138 A2 discloses a power tool including a main body control unit that performs PWM control on an output of a motor. Whenever the voltage detected by a voltage measurement unit decreases and becomes lower than or equal to a predetermined discharge detection voltage, the main body control unit drives the motor at a duty ratio that is lower than that before the voltage decreased and became lower than or equal to the predetermined value.

It is an object of the present invention to provide a power tool capable of determining the load applied to the motor with a limited number of components.

A power tool according to one aspect of the present invention includes a motor that is driven by power supplied from a battery pack, a trigger switch that is operable by a user, and a controller that controls the motor in accordance with an operation amount of the trigger switch, wherein the controller includes a load determination unit that uses a terminal voltage of the battery pack when the motor is stopped as a reference voltage to determine load applied to the motor based on a relationship of a voltage drop amount from the reference voltage when the motor is driven, the operation amount of the trigger switch, and an operation time of the trigger switch.

The power tool of the present invention is capable of determining the load applied to a motor while reducing the number of components.

Fig. 1 is a schematic side view showing the structure of one embodiment of a power tool.

Fig. 2 is a schematic block diagram showing the configuration of the power tool.

Fig. 3 is a graph showing the relationship of a trigger operation amount of a trigger switch and a duty ratio of a controller in the power tool.

Fig. 4 is a graph showing the estimated current based on the operation amount of the trigger switch and a voltage drop amount of a battery pack in the power tool.

Fig. 5 is a graph showing the temperature increase in a motor that is caused by the difference in the amount of current flowing in the motor of the power tool.

Fig. 6 is a graph showing the voltage drop amount in one operation example of the power tool.

Fig. 7 is a diagram showing one operation example of the power tool.

Fig. 8 is a diagram showing one operation example of the power tool.

One embodiment of a power tool will now be described with reference to the drawings.

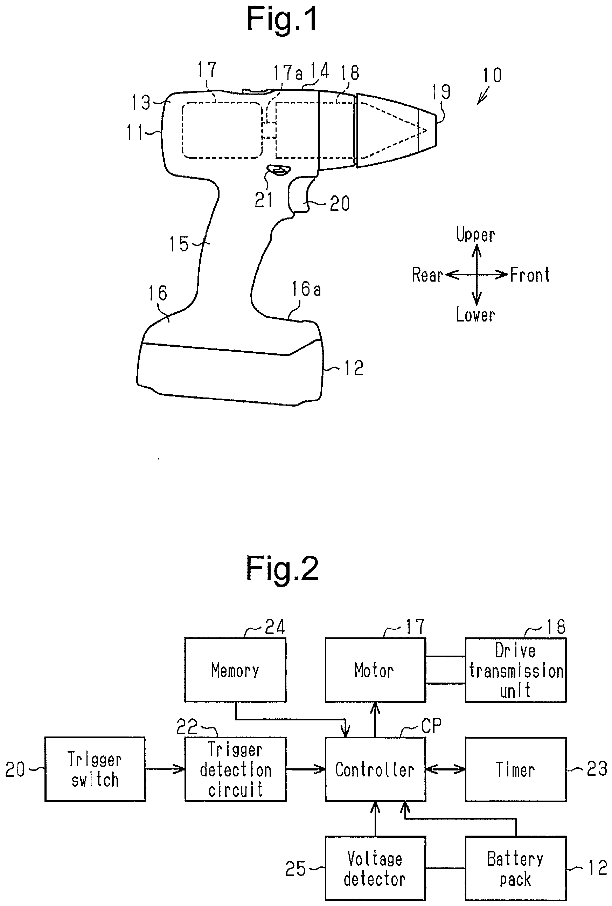

As shown in Fig. 1, a power tool 10 of the present embodiment includes a power tool body 11 and a battery pack 12, which is attached to the power tool body 11 in a removable manner.

A housing 13, which forms the shell of the power tool body 11, includes a tubular body 14, a grip 15, and a battery pack seat 16. The grip 15 extends downward from the middle of the body 14 in the longitudinal direction. The battery pack seat 16 receives the battery pack 12 at the lower end of the grip 15.

As shown in Fig. 1, the body 14 includes a motor 17 and a drive transmission unit 18, which are arranged in the body 14. The drive transmission unit 18 is coupled to a motor shaft 17a of the motor 17. The drive transmission unit 18 transmits rotational drive force generated by the motor 17 to an output shaft (not shown), which is located in front of the drive transmission unit 18. The drive transmission unit 18 includes, for example, a reduction drive and a clutch mechanism.

The drive transmission unit 18 is coupled to a chuck 19 located at a distal end of the output shaft. Thus, the drive transmission unit 18 rotates the chuck 19 when the motor 17 produces rotation. A bit such as a screwdriver bit or a tap is attached to the chuck 19 in a removable manner and rotated together with the chuck 19. In the present embodiment, the axial direction of the motor shaft 17a of the motor 17 is referred to as the longitudinal (front-to-rear) direction, the direction in which the grip 15 extends is referred to as the vertical direction, and the widthwise direction of the power tool 10 orthogonal to the front-to-rear direction and the vertical direction is referred to as the lateral direction.

The grip 15 of the power tool body 11 extends downward from the longitudinally middle portion of the body 14. A trigger switch 20 is arranged at the upper end of the grip 15. A user operates the trigger switch 20 to instruct the power tool body 11 to start and stop operating. The location of the grip 15 is not particularly limited as long as the grip 15 is arranged on the power tool body 11.

A forward-reverse switch 21 is arranged slightly above the trigger switch 20. For example, the forward-reverse switch 21 is exposed and projected from the surface of the grip 15. The location of the forward-reverse switch 21 is not particularly limited as long as the forward-reverse switch 21 is arranged on the power tool body 11. The user uses the forward-reverse switch 21 to instruct the rotation direction of a tool (bit), that is, the rotation direction of the motor 17. The forward-reverse switch 21 includes an operation lever that extends through the grip 15 in the lateral direction. The operation lever is moved in the lateral direction to instruct the rotation direction of the motor 17.

The battery pack seat 16 is arranged at the lower end of the grip 15. The battery pack seat 16 has the form of a flat box elongated in the longitudinal direction (front-to-rear direction) of the body 14.

The electrical configuration of the power tool 10 of the present embodiment will now be described with reference to Fig. 2.

As shown in Fig. 2, the power tool 10 includes the motor 17, a controller CP, the trigger switch 20, a trigger detection circuit 22, a timer 23, a memory 24, the battery pack 12, and a voltage detector 25.

The trigger detection circuit 22 is electrically connected to the controller CP. The trigger detection circuit 22 provides the controller CP with an operation signal that drives the motor 17 in accordance with the operated amount (pulled amount) of the trigger switch. Such a trigger detection circuit 22 is also included in a conventional power tool in the same manner.

The timer 23 is electrically connected to the controller CP. The timer 23 measures the operation time of the trigger switch 20. The timer 23 includes, for example, a counter circuit.

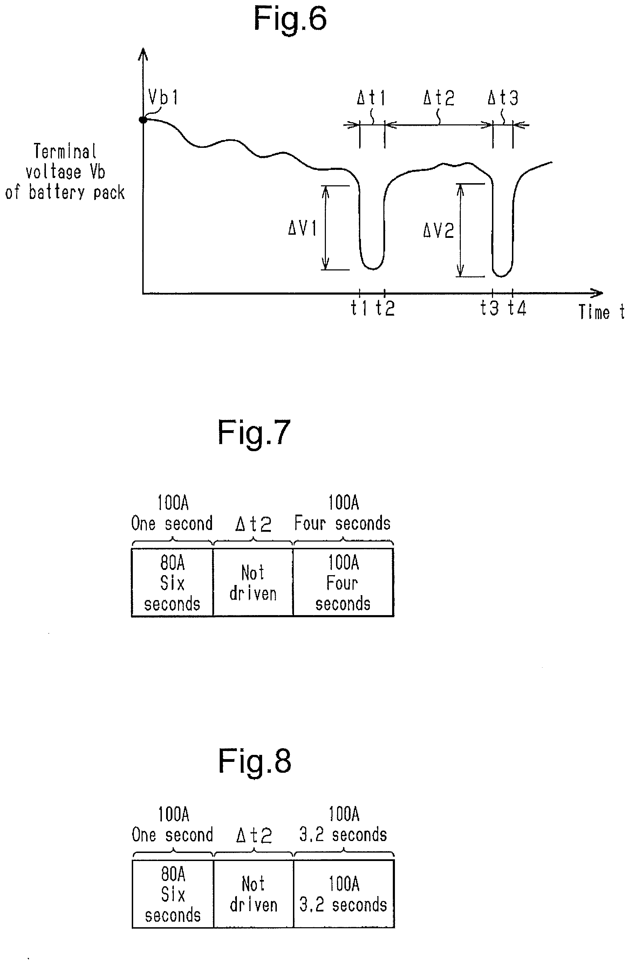

The memory 24 stores various types of information. For example, the memory 24 stores a terminal voltage Vb of the battery pack 12 immediately before operation of the trigger switch 20, that is, before the motor 17 is driven, as a reference voltage Vb1 (refer to Fig. 6).

The voltage detector 25 is configured to detect the terminal voltage Vb of the battery pack 12 and provide the controller CP with information related to the detected terminal voltage Vb.

The controller CP is configured to supply power from the battery pack 12 to the motor 17 based on an operation signal from the trigger detection circuit 22.

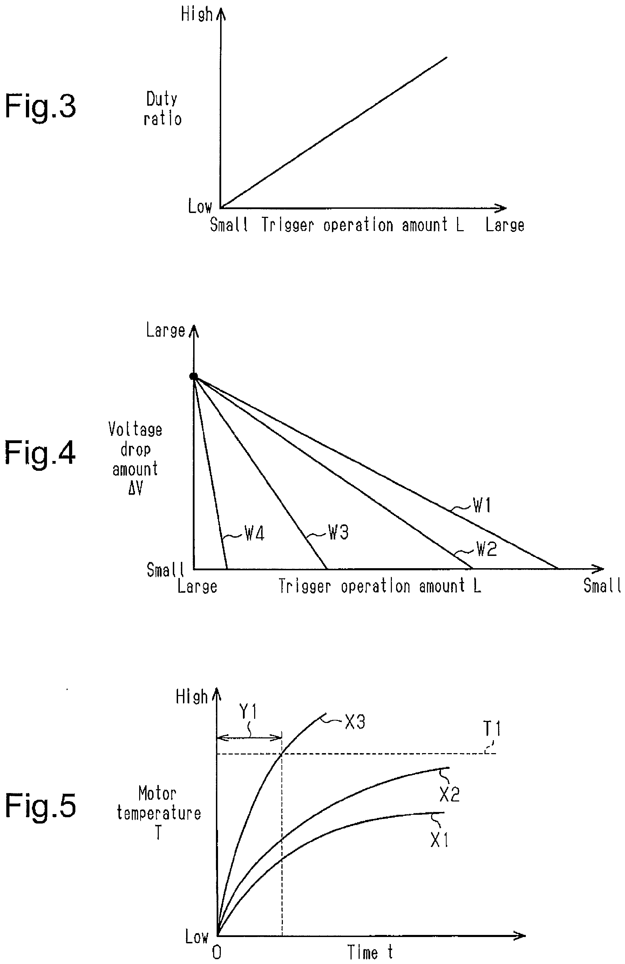

More specifically, as shown in Figs. 2 and 3, the controller CP controls the motor 17 to perform PWM control on switching elements (not shown) at a higher duty ratio as the trigger operation amount L increases.

Further, when provided with the operation signal from the trigger detection circuit 22, the controller CP activates the timer 23 to measure the operation time of the trigger switch 20.

Fig. 4 shows the relationship of the trigger operation amount L and a voltage drop amount ΔV.

As shown by straight lines W1 to W4 in Fig. 4, the trigger operation amount L increases as the voltage drop amount ΔV increases. Straight lines W1 to W4 in Fig. 4 each show the required torque that differs depending on the task. More specifically, the required torque increases in the order of straight lines W1, W2, W3, and W4. The T-I characteristic of the motor also increases the required current value in this order. For example, straight line W1 indicates a task operation performed when the current value is 5 A, straight line W2 indicates a task performed when the current value is 20 A, straight line W3 indicates a task performed when the current value is 40 A, and straight line W4 indicates a task performed when the current value is 100 A.

In the power tool 10 of the present embodiment, the above relationship is stored in the memory 24 in advance as a table for estimating current. This allows the controller CP to estimate the value of the current that flows through the motor 17 with reference to the current estimation table, which is stored in the memory 24, using the voltage drop amount ΔV, which is detected by the voltage detector 25 when the motor 17 is driven, and the trigger operation amount L, which is detected by the trigger detection circuit 22.

Fig. 5 is a graph showing the temperature increase of the motor that is caused by differences in value of current flowing through the motor.

As shown by lines X1 to X3 in Fig. 5, the temperature of the motor gradually increases when the motor is driven. In Fig. 5, lines X1 to X3 represent different values of current that flow through the motor. More specifically, the value of the current flowing through the motor increases in the order of lines X1, X2, and X3, in which line X1 represents 10 A, line X2 represents 50 A, and line X3 represents 100 A.

As described above, the controller CP is capable of estimating the temperature of the motor 17 from, for example, the current value estimated by the controller CP (estimated current value). This allows the controller CP to determine the load applied to the motor 17. Thus, the controller CP includes as a load determination unit. An example of a motor load determination will now be described. With reference to Fig. 5, in the motor load determination described below, overload is determined at temperature T1 that corresponds to operable time Y1 (for example, four seconds) of the motor in line X3, which indicates that the current value is 100 A.

### Motor Load Determination Function

As shown in Fig. 2, the controller CP uses the voltage detector 25 to measure (obtain) the terminal voltage Vb (reference voltage Vb1 (refer to Fig. 6)) of the battery pack 12 immediately before a task is started. Then, the controller CP stores the terminal voltage Vb in the memory 24.

When the trigger switch 20 is operated, the trigger detection circuit 22 provides the controller CP with an operation signal. When receiving the operation signal, the controller CP supplies power to the motor 17 to drive the motor 17. The controller CP activates the timer 23 to start measuring the task time.

Further, the controller CP uses the voltage detector 25 to detect the terminal voltage Vb of the battery pack 12 constantly or at predetermined timings.

Referring to Fig. 6, when a voltage drop amount ΔV1 that is larger than a predetermined value occurs at time t1, the controller CP (Fig. 2) refers to the table in the memory 24 (Fig. 2) to estimate the current value of the motor 17 (Fig. 2) from the voltage drop amount ΔV1.

Referring to Fig. 2, the controller CP uses the timer 23 to obtain the period during which current continues to flow at the estimated value. In this example, during period Δt1 (time t1 to time t2), the controller CP estimates that the current value of the motor 17 is 80 A from the voltage drop amount ΔV1 and determines that the current value of the motor 17 has been continuously 80 A for six seconds, which is measured by the timer 23. Referring to Fig. 7, a task in which 80 A of current flows through the motor 17 for six seconds is equivalent to a task in which 100 A of current flows through the motor 17 for about one second. When the controller CP determines that the task in which 100 A of current of flows through the motor 17 for about one second is not an overload, the controller CP temporarily stores the task content of period Δt1 (80 A, six seconds) in the memory 24. That is, the controller CP compares the period in which 100 A of current flows through the motor 17 with operable time Y1 and determines that the period is shorter than operable time Y1 of the motor. Thus, the controller CP determines that this task does not result in an overload.

When period Δt2 (time t2 to time t3), which follows period Δt1, is greater than or equal to a predetermined time (for example, three seconds), the controller CP determines that the motor, which was heated during period Δt1, has been sufficiently cooled and deletes the task content from the memory 24. That is, when a predetermined time elapses from when the voltage drop ends during period Δt1, the controller CP determines that the heated motor has been sufficiently cooled and deletes the operation amount from the memory 24.

Referring to Fig. 6, when a voltage drop amount ΔV2, which is greater than a predetermined value, occurs at time t3, the controller CP refers to the table in the memory 24 (Fig. 2) to estimate the current value of the motor 17 (Fig. 2) from the voltage drop amount ΔV2.

The controller CP uses the timer 23 to measure the period during which current continues to flow at the estimated value. In this example, referring to Fig. 7, when a voltage drop amount ΔV2 occurs during period Δt3 (time t3 to time t4), the controller CP estimates that the current value of the motor 17 is 100 A and determines that the current value of the motor 17 has been 100 A for four seconds, which is measured by the timer 23. The controller CP compares the period during which 100 A of current flows through the motor with operable time Y1 and determines that the period is the same as operable time Y1 of the motor. Thus, the controller CP determines that the task in which 100 A of current flows through the motor 17 for four seconds results in an overload and stops the motor 17.

When period Δt2, which follows period Δt1, is shorter than the predetermined time (for example, three seconds), the controller CP stores the task content of period Δt1 in the memory.

When the voltage drop amount ΔV2, which is greater than the predetermined value, occurs at time t3 as shown in Fig. 6, the controller CP (Fig. 2) refers to the table in the memory 24 (Fig. 2) to estimate the value of the current flowing through the motor 17 from the voltage drop amount ΔV2. The controller CP uses the timer 23 to measure the period during which current continues to flow at the estimated value. In this example, referring to Fig. 8, the controller CP estimates that the current value of the motor 17 is 100 A from the voltage drop amount ΔV2 and determines that the current value of the motor 17 has been 100 A for 3.2 seconds, which is measured by the timer 23. Referring to Fig. 8, the estimated current value of period Δt3, during which the voltage drop amount ΔV2 occurs, is equivalent to a task in which 100 A of current flows through the motor 17 for 3.2 seconds. The controller CP adds the task in which 100 A of current flows through the motor 17 for approximately one second during period Δt1 and the task in which 100 A of current flows through the motor 17 for 3.2 seconds during period Δt3 to make a determination for a task in which 100 A of current flows through the motor 17 for four seconds. The controller CP compares the period of four seconds, during which 100 A of current flows through the motor 17, with operable time Y1 (for example, four seconds). If the period is longer than or equal to operable time Y1 of the motor, the controller CP determines the task results in an overload and stops the motor 17.

The present embodiment has the advantages described below.
(1) The controller CP determines the load applied to the motor 17 with the relationship of the voltage drop amount ΔV from the reference voltage Vb1 when the motor 17 is driven, the operation amount of the trigger switch 20, and the operation time of the trigger switch 20. In this manner, the controller CP determines the load applied to the motor 17 using the operation amount of the trigger switch 20 and the terminal voltage (voltage drop amount) of the battery pack 12. The trigger switch 20 and the battery pack 12 are also included in a conventional power tool. In other words, there is no need for sensors that monitor, for example, the rotation speed, temperature, and current of the motor 17. This allows the controller CP to determine the load applied to the motor 17 while limiting the number of components.
(2) The controller CP estimates the current that flows through the motor 17 with the voltage drop amount ΔV from the reference voltage Vb1. If the operation time of the motor 17 at the estimated current exceeds operable time Y1, the controller CP determines that an overload is applied to the motor 17 and stops the motor 17. In this manner, when it is determined that an overload is applied to the motor 17, the motor 17 is stopped. This reduces overloads applied to the motor 17 and limits failures of the motor 17 caused by heat.

It should be apparent to those skilled in the art that the present invention may be embodied in many other specific forms. Particularly, it should be understood that the present invention may be embodied in the following form.

In the embodiment, operable time Y1 is four seconds when a task is performed at 100 A. However, operable time Y1 may be changed in accordance with the specifications of the power tool and the motor.

## Claims

1. A power tool (10) comprising:
a motor (17) that is driven by power supplied from a battery pack;
a trigger switch (20) that is operable by a user; and
a controller (CP) that controls the motor (17) in accordance with an operation amount of the trigger switch (20);
**characterized in that**
the controller (CP) includes a load determination unit (CP) that uses a terminal voltage of the battery pack when the motor (17) is stopped as a reference voltage to determine load applied to the motor (17) based on a relationship of a voltage drop amount from the reference voltage when the motor (17) is driven, the operation amount of the trigger switch (20), and an operation time of the trigger switch (20).

2. The power tool (10) according to claim 1, wherein
the load determination unit (CP) estimates current that flows through the motor (17) in accordance with the voltage drop amount from the reference voltage when the motor (17) is driven and determines that overload is applied to the motor (17) when the motor (17) operates for a predetermined operable time or longer at the estimated current, and
the controller stops the motor (17) when the load determination unit (CP) determines that an overload is being applied to the motor (17).

3. The power tool (10) according to claim 2, further comprising a memory that stores a table indicating a relationship of the voltage drop amount from the reference voltage when the motor (17) is driven and the operation amount of the trigger switch (20), wherein
the load determination unit (CP) is configured to specify the voltage drop amount from the reference voltage when the motor (17) is driven from the operation amount of the trigger switch (20) based on the table.

4. The power tool (10) according to claim 3, wherein the table indicates the relationship of the voltage drop amount and the operation amount of the trigger switch (20) for each of a plurality of tasks in which the motor (17) operates with different torques.

5. The power tool (10) according to claim 4, wherein the load determination unit (CP) is configured to specify the voltage drop amount from the operation amount of the trigger switch (20) based on the relationship of the voltage drop amount and the operation amount of the trigger switch (20) that corresponds to one of the tasks in the table.

6. The power tool (10) according to any one of claims 2-5, further comprising a timer that measures the operation time of the trigger switch (20) to generate first operation time data that shows the measured operation time.

7. The power tool (10) according to claim 6, wherein the load determination unit (CP) is configured to:
receive the first operation time data from the timer;
specify a first period during which the estimated current flows through the motor (17) based on the first operation time data;
compare a first period of the motor (17) with the predetermined operable time; and
determine that overload is applied to the motor (17) when determining that the first period is longer than or equal to the predetermined operable time.

8. The power tool (10) according to claim 7, wherein when the trigger switch (20) is operated again, the timer measures the operation time of the trigger switch (20) to generate second operation time data that shows the measured operation time, and
the load determination unit (CP) is configured to:
receive the second operation time data from the timer;
specify a second period during which the estimated current flows through the motor (17) based on the second operation time data; and
add the first period to the second period to compare the added period with the predetermined operable time.

9. The power tool (10) according to claim 8, wherein when the trigger switch (20) is operated again after a predetermined time elapses from when the trigger switch (20) was previously operated, the load determination unit (CP) is configured to compare only the second period with the predetermined operable time.

10. The power tool (10) according to any one of claims 3-9, wherein the load determination unit (CP) is configured to:
measure a terminal voltage of the battery pack constantly or at predetermined timings to store the measured terminal voltages of the battery pack in the memory; and
select the one of the terminal voltages of the battery pack stored in the memory that was measured immediately before operation of the trigger switch (20) as the reference voltage.

## Patentansprüche

1. Elektrowerkzeug (10), aufweisend:
einen Motor (17), der durch Strom angetrieben wird, der von einem Batteriepack geliefert wird;
einen Triggerschalter (20), der von einem Benutzer betätigt werden kann; und
eine Steuerung (CP), die den Motor (17) in Übereinstimmung mit einem Betätigungsbetrag des Triggerschalters (20) steuert;
**dadurch gekennzeichnet, dass**
die Steuerung (CP) eine Lastbestimmungseinheit (CP) enthält, die eine Klemmenspannung des Batteriepacks, wenn der Motor (17) angehalten ist, als Referenzspannung verwendet, um die Last, die auf den Motor (17) ausgeübt wird, auf der Grundlage einer Beziehung eines Spannungsabfallbetrags von der Referenzspannung, wenn der Motor (17) angetrieben wird, des Betätigungsbetrags des Triggerschalters (20) und einer Betätigungszeit des Triggerschalters (20) zu bestimmen.

2. Elektrowerkzeug (10) nach Anspruch 1, wobei
die Lastbestimmungseinheit (CP) den Strom, der durch den Motor (17) fließt, in Übereinstimmung mit dem Spannungsabfallbetrag von der Referenzspannung schätzt, wenn der Motor (17) angetrieben wird, und bestimmt, dass eine Überlast auf den der Motor (17) ausgeübt wird, wenn der Motor (17) für eine vorbestimmte Betriebszeit oder länger mit dem geschätzten Strom arbeitet, und
die Steuerung den Motor (17) anhält, wenn die Lastbestimmungseinheit (CP) bestimmt, dass eine Überlast auf den Motor (17) ausgeübt wird.

3. Elektrowerkzeug (10) nach Anspruch 2, ferner mit einem Speicher, der eine Tabelle speichert, die eine Beziehung zwischen dem Spannungsabfallbetrag von der Referenzspannung, wenn der Motor (17) angetrieben wird, und dem Betätigungsbetrag des Triggerschalters (20) angibt, wobei
die Lastbestimmungseinheit (CP) konfiguriert ist, um den Spannungsabfallbetrag von der Referenzspannung, wenn der Motor (17) angetrieben wird, anhand des Betätigungsbetrag des Triggerschalters (20) auf der Grundlage der Tabelle zu spezifizieren.

4. Elektrowerkzeug (10) nach Anspruch 3, wobei die Tabelle die Beziehung des Spannungsabfallbetrags und des Betätigungsbetrags des Triggerschalters (20) für jede mehrerer Aufgaben angibt, bei denen der Motor (17) mit unterschiedlichen Drehmomenten arbeitet.

5. Elektrowerkzeug (10) nach Anspruch 4, wobei die Lastbestimmungseinheit (CP) konfiguriert ist, um den Spannungsabfallbetrag anhand des Betätigungsbetrags des Triggerschalters (20) auf der Grundlage der Beziehung des Spannungsabfallbetrags und des Betätigungsbetrags des Triggerschalters (20), der einer der Aufgaben in der Tabelle entspricht, zu spezifizieren.

6. Elektrowerkzeug (10) nach einem der Ansprüche 2-5, ferner mit einem Zeitgeber, der die Betriebszeit des Triggerschalters (20) misst, um erste Betriebszeitdaten zu erzeugen, die die gemessene Betriebszeit zeigen.

7. Elektrowerkzeug (10) nach Anspruch 6, wobei die Lastbestimmungseinheit (CP) konfiguriert ist, um:
die ersten Betriebszeitdaten von der Zeitgeber zu empfangen;
eine erste Periode zu spezifizieren, während der der geschätzte Strom durch den Motor (17) auf der Grundlage der ersten Betriebszeitdaten fließt;
eine erste Periode des Motors (17) mit der vorbestimmten Betriebszeit zu vergleichen; und
zu bestimmen, dass eine Überlast auf den Motor (17) ausgeübt wird, wenn bestimmt wird, dass die erste Periode länger als die vorbestimmte Betriebszeit oder gleich der vorbestimmten Betriebszeit ist.

8. Elektrowerkzeug (10) nach Anspruch 7, wobei, wenn der Triggerschalter (20) erneut betätigt wird, der Zeitgeber die Betriebszeit des Triggerschalters (20) misst, um zweite Betriebszeitdaten zu erzeugen, die die gemessene Betriebszeit angeben, und
die Lastbestimmungseinheit (CP) konfiguriert ist, um:
die zweiten Betriebszeitdaten von dem Zeitgeber zu empfangen;
eine zweite Periode, während der der geschätzte Strom durch den Motor (17) fließt, auf der Grundlage der zweiten Betriebszeitdaten zu spezifizieren; und
die erste Periode zu der zweiten Periode hinzuzufügen, um die hinzugefügte Periode mit der vorbestimmten Betriebszeit zu vergleichen.

9. Elektrowerkzeug (10) nach Anspruch 8, wobei, wenn der Triggerschalter (20) erneut betätigt wird, nachdem eine vorbestimmte Zeit ausgehend von dem Zeitpunkt, in dem der Triggerschalter (20) zuvor betätigt wurde, verstrichen ist, die Lastbestimmungseinheit (CP) konfiguriert ist, um nur die zweite Periode mit der vorbestimmten Betriebszeit zu vergleichen.

10. Elektrowerkzeug (10) nach einem der Ansprüche 3-9, wobei die Lastbestimmungseinheit (CP) konfiguriert ist, um:
eine Klemmenspannung des Batteriepacks fortwährend oder zu vorbestimmten Zeitpunkten zu messen, um die gemessenen Klemmenspannungen des Batteriepacks in dem Speicher zu speichern; und
diejenige der in dem Speicher gespeicherten Klemmenspannungen des Batteriepacks, die unmittelbar vor der Betätigung des Triggerschalters (20) gemessen wurde, als Referenzspannung zu wählen.

## Revendications

1. Outil électrique (10) comprenant :
un moteur (17) qui est entraîné par une énergie fournie par une batterie ;
un bouton de déclenchement (20) qui peut être actionné par un utilisateur ; et
un contrôleur (CP) qui contrôle le moteur (17) selon une quantité de fonctionnement du bouton de déclenchement (20) ;
**caractérisé en ce que**
le contrôleur (CP) comprend une unité de détermination de charge (CP) qui utilise une tension terminale de la batterie lorsque le moteur (17) est arrêté en guise de tension de référence afin de déterminer la charge appliquée au moteur (17) sur la base d'une relation entre une quantité de baisse de tension par rapport à la tension de référence lorsque le moteur (17) est entraîné, la quantité de fonctionnement du bouton de déclenchement (20), et une durée de fonctionnement du bouton de déclenchement (20).

2. Outil électrique (10) selon la revendication 1, dans lequel
l'unité de détermination de charge (CP) estime le courant qui circule dans le moteur (17) selon la quantité de baisse de tension par rapport à la tension de référence lorsque le moteur (17) est entraîné, et détermine qu'une surcharge est appliquée au moteur (17) lorsque le moteur (17) fonctionne pendant une durée prédéterminée ou plus longtemps au courant estimé, et
le contrôleur arrête le moteur (17) lorsque l'unité de détermination de charge (CP) détermine qu'une surcharge est appliquée au moteur (17).

3. Outil électrique (10) selon la revendication 2, comprenant en outre une mémoire qui stocke un tableau qui indique une relation entre la quantité de baisse de tension par rapport à la tension de référence lorsque le moteur (17) est entraîné et la quantité de fonctionnement du bouton de déclenchement (20), dans lequel
l'unité de détermination de charge (CP) est configurée pour spécifier la quantité de baisse de tension par rapport à la tension de référence lorsque le moteur (17) est entraîné à partir de la quantité de fonctionnement du bouton de déclenchement (20) sur la base du tableau.

4. Outil électrique (10) selon la revendication 3, dans lequel le tableau indique la relation entre la quantité de baisse de tension et la quantité de fonctionnement du bouton de déclenchement (20) pour chacune d'une pluralité de tâches au cours desquelles le moteur (17) fonctionne avec différents couples.

5. Outil électrique (10) selon la revendication 4, dans lequel l'unité de détermination de charge (CP) est configurée pour spécifier la quantité de baisse de tension à partir de la quantité de fonctionnement du bouton de déclenchement (20) sur la base de la relation entre la quantité de baisse de tension et la quantité de fonctionnement du bouton de déclenchement (20) qui correspond à l'une des tâches du tableau.

6. Outil électrique (10) selon l'une quelconque des revendications 2 à 5, comprenant en outre un minuteur qui mesure la durée de fonctionnement du bouton de déclenchement (20) afin de générer des premières données de durée de fonctionnement qui indiquent la durée de fonctionnement mesurée.

7. Outil électrique (10) selon la revendication 6, dans lequel l'unité de détermination de charge (CP) est configurée pour :
recevoir les premières données de durée de fonctionnement de la part du minuteur ;
spécifier une première période pendant laquelle le courant estimé circule dans le moteur (17) sur la base des premières données de durée de fonctionnement ;
comparer une première période du moteur (17) avec la durée de fonctionnement prédéterminée ; et
déterminer qu'une surcharge est appliquée au moteur (17) lorsqu'il est déterminé que la première période est plus longue ou égale à la période de fonctionnement prédéterminée.

8. Outil électrique (10) selon la revendication 7, dans lequel, lorsque le bouton de déclenchement (20) est actionné à nouveau, le minuteur mesure la durée de fonctionnement du bouton de déclenchement (20) afin de générer des secondes données de durée de fonctionnement qui indiquent la durée de fonctionnement mesurée, et
l'unité de détermination de charge (CP) est configurée pour :
recevoir les secondes données de durée de fonctionnement de la part du minuteur ;
spécifier une seconde période pendant laquelle le courant estimé circule dans le moteur (17) sur la base des secondes données de durée de fonctionnement ; et
ajouter la première période à la seconde période afin de comparer la période ajoutée avec la durée de fonctionnement prédéterminée.

9. Outil électrique (10) selon la revendication 8, dans lequel, lorsque le bouton de déclenchement (20) est actionné à nouveau après qu'une durée prédéterminée s'est écoulée depuis le moment auquel le bouton de déclenchement (20) a été actionné auparavant, l'unité de détermination de charge (CP) est configurée pour comparer uniquement la seconde période avec la durée de fonctionnement prédéterminée.

10. Outil électrique (10) selon l'une quelconque des revendications 3 à 9, dans lequel l'unité de détermination de charge (CP) est configurée pour :
mesurer une tension terminale de la batterie en permanence ou à des moments prédéterminés afin de stocker les tensions terminales mesurées de la batterie dans la mémoire ; et
sélectionner l'une des tensions terminales de la batterie stockées dans la mémoire qui a été mesurée juste avant l'actionnement du bouton de déclenchement (20) en guise de tension de référence.
